# FASCICULE DE BREVET EUROPEEN

(11) **EP 2 525 964 B1**
(45) Date de publication et mention de la délivrance du brevet: **11.03.2015**
(21) Numéro de dépôt: 11700618.9
(22) Date de dépôt: 19.01.2011
(51) Int. Cl.: B29C 70/32, B29C 70/54, B29C 70/88, F16C 7/00

(54) **PROCEDE DE FABRICATION DE PIECES COMPOSITES COMPORTANT DES FIBRES TRESSEES**
VERFAHREN ZUR HERSTELLUNG VON VERBUNDSTOFFTEILEN MIT GEFLOCHTENEN FASERN
METHOD FOR MANUFACTURING COMPOSITE PARTS COMPRISING BRAIDED FIBERS

(30) Priorité: 22.01.2010 FR 1050418; 06.09.2010 FR 1057073
(43) Date de publication de la demande: 28.11.2012
(73) Titulaire: Messier-Bugatti-Dowty, 78140 Vélizy-Villacoublay (FR)
(72) Inventeur: MASSON, Richard, 78350 Les Loges en Josas (FR); GOURET, Mathieu, F-27200 Vernon (FR); BOUDIER, Romain, F-78000 Versailles (FR)
(74) Mandataire: Parzy, Benjamin Alain
(86) Numéro de dépôt international: PCT/EP2011/000199
(87) Numéro de publication internationale: WO 2011/095278

(56) Documents cités:
- WO-A1-2006/015598
- FR-A1- 2 893 532

## Description

L'invention concerne un procédé de fabrication d'une pièce en matériau composite, notamment une bielle en matériau composite comportant un corps principal dont une partie telle qu'une extrémité est renforcée pour supporter une concentration de contrainte mécanique.

### ARRIERE PLAN DE L'INVENTION

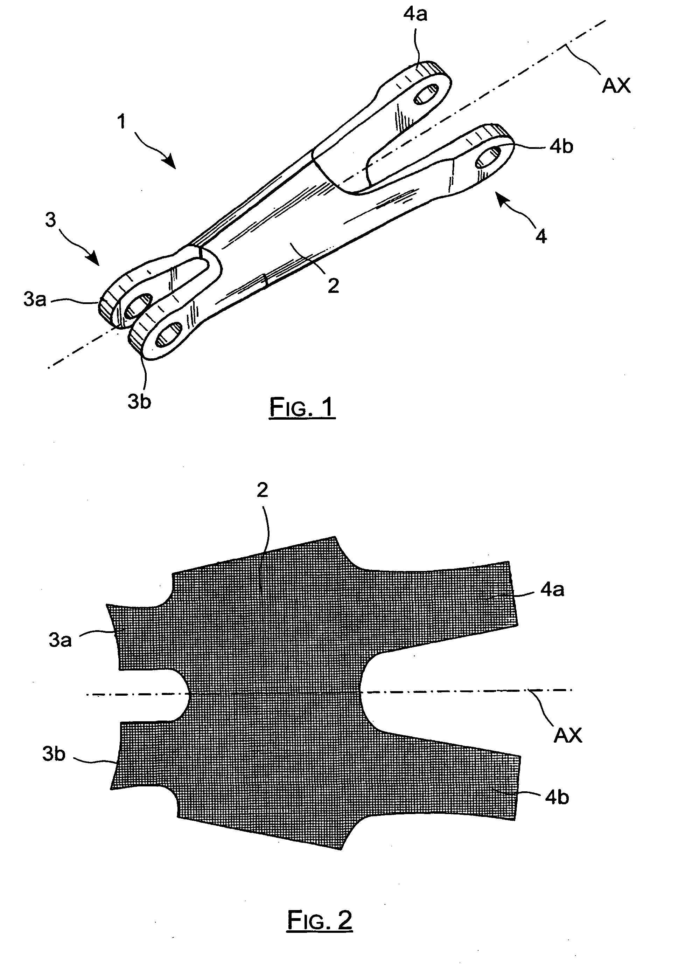

Une telle bielle, représentée dans la figure 1 en y étant repérée par 1, comprend un corps principal creux 2 généralement tubulaire prolongé à chacune de ses extrémité par une chape double, ces chapes doubles étant ici repérées par 3 et 4.

Chaque chape double 3, 4 comprend deux ailes, repérées par 3a, 3b, 4a et 4b, qui sont toutes constituées d'une épaisseur de matériau composite supérieure à l'épaisseur nominale de matériau composite dans le reste de la bielle. Les deux ailes de chaque chape s'étendent parallèlement à la direction générale AX du corps principal creux, et chaque aile comprend un alésage dans lequel est monté un palier métallique.

Selon un procédé connu du document de brevet FR2893532, cette bielle est fabriquée à partir d'une pièce de tissu de fibres renforçantes découpée selon une forme représentée en figure 2. Cette forme comprend une portion centrale pour le corps principal creux 2, et quatre extensions correspondant chacune à une aile de chape double.

Le tissu utilisé est un tissu de fibres de carbone d'épaisseur constante, de type 2,5D, c'est-à-dire comprenant plusieurs couches de fibres tissées superposées, et qui sont liées les unes aux autres par des fibres de liaison encore appelées fibres transverses.

La fabrication de cette bielle consiste à replier la pièce de tissu de la figure 2 en l'appliquant sur un mandrin ou analogue, puis à injecter de la résine dans le tissu de fibres renforçantes et à cuire l'ensemble pour polymériser cette résine.

L'augmentation d'épaisseur des chapes est réalisée préalablement à la mise en forme du tissu, en coupant les fibres de liaison des couches de base du tissu 2,5D au niveau des chapes, de manière à désolidariser localement ces couches de base les unes des autres.

Des couches intercalaires sont alors insérées localement entre les couches de base désolidarisées, ce qui permet d'augmenter l'épaisseur localement. Après ajout des couches intercalaires, des fibres dites transverses sont passées à travers l'ensemble pour solidariser toutes les couches les unes aux autres.

Les ailes de chaque chape ont ainsi une épaisseur significativement supérieure à l'épaisseur du reste de la bielle, de manière à accroître la résistance mécanique qu'oppose la chape aux efforts exercés sur celle-ci selon la direction AX. Ces efforts résultent de la charge normale de la bielle lorsque sa chape est montée sur un axe non représenté dans les figures.

En pratique, ce procédé de fabrication, s'il reste satisfaisant en ce qui concerne la tenue mécanique de la bielle ainsi obtenue, est néanmoins contraignant en ce qui concerne sa mise en oeuvre, dans la mesure où il est fortement tributaire du savoir faire de l'opérateur qui le met en oeuvre.

On connaît par ailleurs des pièces fabriquées à l'aide d'un mandrin creux passé au travers de l'orifice central d'une machine à tresser de sorte à recouvrir le mandrin d'une ou de plusieurs couches de fibres tressées. Une résine est ensuite injectée sur l'ensemble polymérisé.

Le procédé de tressage impose cependant des contraintes sur la conception des pièces qui ne doivent pas présenter de brusques variations de section.

Or, il est fréquent de prévoir sur des pièces fortement sollicitées des surépaisseurs locales dans les zones de concentration de contraintes. C'est notamment le cas des balanciers d'atterrisseur qui doivent comporter des paliers pour recevoir un essieu. Les paliers proéminents de part et d'autre du corps du balancier forment avec ce corps, des zones de transition à variation brusque de section. La réalisation par tressage d'un tel balancier ne pourrait être obtenue qu'avec un mandrin présentant une faible variation de section et obligerait à prévoir une surépaisseur de matière sur toute la pièce augmentant son poids et son encombrement.

Il a été proposé dans le document FR2890591 de réaliser une pièce comportant une préforme fibreuse renforcée par des bandes de tissu de fibres monodirectionnelles préimprégnées, s'étendant selon une direction longitudinale de la pièce afin de renforcer ladite pièce, notamment en compression.

La mise en place des bandes est cependant très délicate pour conserver une orientation et une densité correctes des fibres qui garantissent la résistance mécanique de la pièce. Or, il existe un risque important de défauts géométriques qui sont liés à des écarts de découpe, des écarts de manipulation et de mise en forme.

### OBJET DE L'INVENTION

Le but de l'invention est de proposer une solution permettant de fabriquer une pièce en matériau composite comportant des fibres tressées, intégrant des zones de renforcement, sans être tributaire du savoir faire de l'opérateur mettant en oeuvre ce procédé.

### RESUME DE L'INVENTION

A cet effet, l'invention a pour objet un procédé de fabrication d'une pièce en matériau composite, notamment une bielle, comprenant des opérations successives d'application de couches de fibres renforçantes tressées autour d'un mandrin et sur tout ou partie de la longueur de ce mandrin en étant superposées les unes aux autres, comportant une étape de découpage d'au moins une couche intermédiaire de fibres renforçantes après son application, une étape de retrait d'une partie découpée avant application de la couche tressée suivante, pour constituer localement au niveau de chaque partie de couche découpée restée en place, une surépaisseur de fibres renforçantes constituant un renforcement local de la pièce, et dans lequel on injecte ensuite de la résine dans les différentes couches tressées avant de polymériser cette résine.

Ce procédé permet de constituer des surépaisseurs de renforcement localisées pour améliorer la tenue mécanique des régions fortement sollicitées. L'invention permet en outre de simultanément mettre en place et en forme les portions de tresse constituant les renforcements, ce qui réduit voire annule les dispersions géométriques dans les surépaisseurs de renforcement.

### BREVE DESCRIPTION DES FIGURES

La figure 1 déjà décrite est une vue d'ensemble d'une bielle en matériau composite connue à deux chapes doubles ;
La figure 2 déjà décrite est une vue à plat de la pièce de tissu de fibres renforçantes utilisée pour fabriquer la bielle de la figure 1 selon un procédé connu ;
La figure 3 montre en perspective un mandrin recouvert d'une première couche de fibres renforçantes tressées ;
La figure 4 est une représentation schématique d'une machine de tressage utilisée pour le dépôt des couches de fibres renforçantes ;
La figure 5 montre en perspective le mandrin recouvert de la première couche de fibres renforçantes tressées et de deux bagues protectrices ;
La figure 6 montre en perspective le mandrin recouvert de la première couche de fibres tressées et d'une couche intermédiaire destinée à être découpée ;
La figure 7 montre en perspective le mandrin recouvert de la première couche de fibres tressées et de la couche intermédiaire de fibres tressées après découpe ;
La figure 8 est une vue schématique d'un appareillage avec lequel la découpe est assurée au moyen d'un faisceau laser ;
La figure 9 est une vue en perspective montrant le retrait d'une partie de la couche intermédiaire après découpe ;
La figure 10 est une vue en perspective du mandrin portant la première couche ainsi que la couche intermédiaire et une dernière couche externe de fibres renforçantes ;
La figure 11 est une vue en perspective montrant une extrémité d'une bielle finie fabriquée conformément à l'invention et dans laquelle cette extrémité constitue une chape double formée dans une portion renforcée ;
La figure 12 est une vue en coupe de la chape de la bielle de la figure 11 montrant la disposition des couches formant surépaisseur locale conformément au procédé selon l'invention ;
La figure 13 est une vue en perspective d'un autre type de bielle fabriquée avec le procédé selon l'invention.

### DESCRIPTION DETAILLEE DE L'INVENTION

L'idée à la base de l'invention est de mettre en oeuvre un procédé de fabrication de pièce en matériau composite telle qu'une bielle, basé sur des opérations de tressage de couches successives de fibres renforçantes, et dans lequel on réalise des surépaisseurs locales de fibres en découpant et en retirant des parties d'une ou plusieurs des couches de fibres renforçantes intermédiaires qui sont appliquées par tressage.

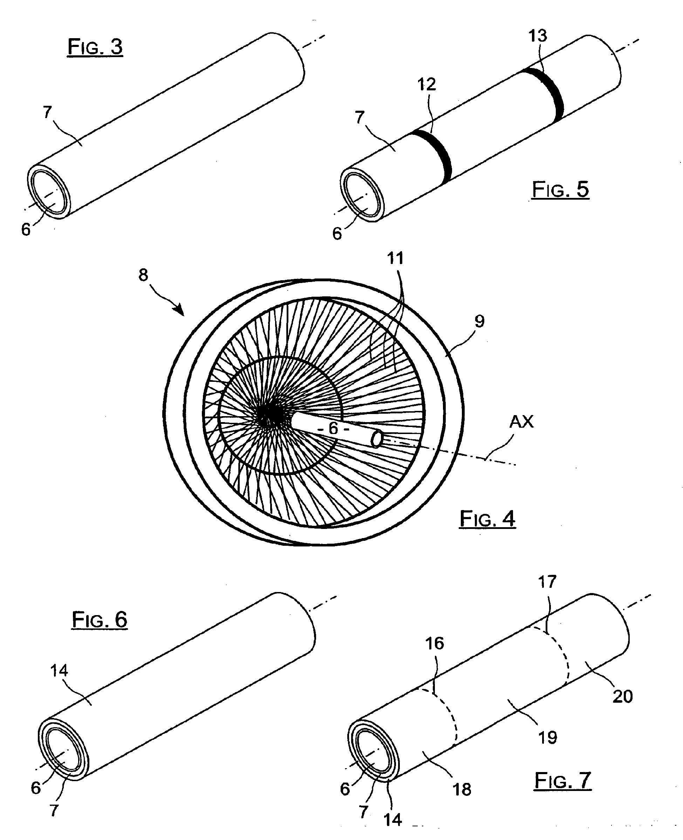

Comme illustré schématiquement en figure 3, on prévoit dans un premier temps un mandrin repéré par 6, qui a ici une forme généralement tubulaire, et sur lequel on applique une première couche de fibres renforçantes tressées, repérée par 7, ces fibres étant par exemple des fibres de carbone.

Le mandrin est par exemple fabriqué à partir de couches de fibres renforçantes préimprégnées appliquées sur un support, pour constituer un ensemble qui est prépolymérisé avant retrait du support, de manière à lui donner une rigidité suffisante pour porter les couches de fibres renforçantes tressées. Le mandrin peut ainsi être conçu pour ne pas être retiré de la bielle en fin de fabrication, mais au contraire pour y être intégré définitivement.

L'application des couches de fibres tressées est assurée avec une machine de tressage telle que celle qui est représentée en figure 4 en y étant repérée par 8. Cette machine 8 comprend principalement un anneau 9 centré sur un axe AX et portant une série de bobines de fibres de carbone 11.

Lorsque le mandrin 6 est déplacé le long de l'axe AX à travers l'anneau 9, l'ensemble étant actionné par des moyens pilotés et asservis, une chaussette de fibres de carbone se tresse autour de la face externe du mandrin 6. La couche ainsi tressée entoure complètement le mandrin 6 tout en s'étendant sur toute sa longueur.

Après application de cette première couche 7 de fibres tressées, deux bandes protectrices, repérées par 12 et 13 dans la figure 6, sont appliquées à la face externe de la couche 7, localement au niveau des découpes que l'on prévoit d'effectuer dans une autre couche tressées, qui sera applique autour de la couche 7 sur toute la longueur du mandrin.

Cette autre couche tressée, qui constitue une couche intermédiaire repérée par 14 dans la figure 6, est appliquée de la même manière que la première couche 6, c'est-à-dire avec la machine à tresser 8.

Après avoir été appliquée, cette couche intermédiaire 14 est découpée pour en retirer une partie, conformément aux découpes repérées par 16 et 17 dans la figure 7. Ces découpes 16 et 17 sont ici des découpes circulaires s'étendant chacune dans un plan normal à l'axe AX du mandrin 6, et elles sont espacées l'une de l'autre le long de cet axe.

Ces découpes 16 et 17 permettent de scinder la couche intermédiaire en trois tronçons consécutifs repérés par 18, 19 et 20 qui sont chacun tubulaire. Les tronçons 18 et 20 correspondent aux extrémités de la bielle en cours de fabrication alors que le tronçon 19 constitue une portion tubulaire centrale devant être retirée.

Comme il ressort des figures 5 et 7, les bandes protectrices 12 et 13 sont placées sur la couche 7, au niveau des découpes ultérieures 16 et 17 de la couche 14. Compte tenu de la forme ici circulaire de chaque découpe 16, 17, les bandes protectrices 12 et 13 ont chacune un forme de bague.

Chaque bande protectrice est fabriquée avec un matériau approprié pour ne pas être dégradé par le procédé mis en oeuvre pour réaliser les découpes 16 et17. Dans l'exemple des figures, les découpes sont réalisées selon un procédé mettant en oeuvre un faisceau laser, de sorte que les bandes protectrices 12 et 13 peuvent être fabriquées en cuivre pour protéger efficacement la couche inférieure 7 lors de la découpe. En effet, le cuivre est difficile à découper au laser car le faisceau est majoritairement réfléchi et diffusé autour du point d'impact.

Il faut noter que ces bandes protectrices sont optionnelles, et que leur mise en oeuvre dépend du procédé de découpe ainsi que de son paramétrage. Par exemple, dans le cas d'un procédé de découpe au laser, le faisceau peut être focalisé de manière à réaliser une découpe sur une profondeur ou épaisseur prédéterminée correspondant uniquement à la couche intermédiaire 14. Dans ces conditions, les bandes protectrices 12 et 13 ne sont pas indispensables.

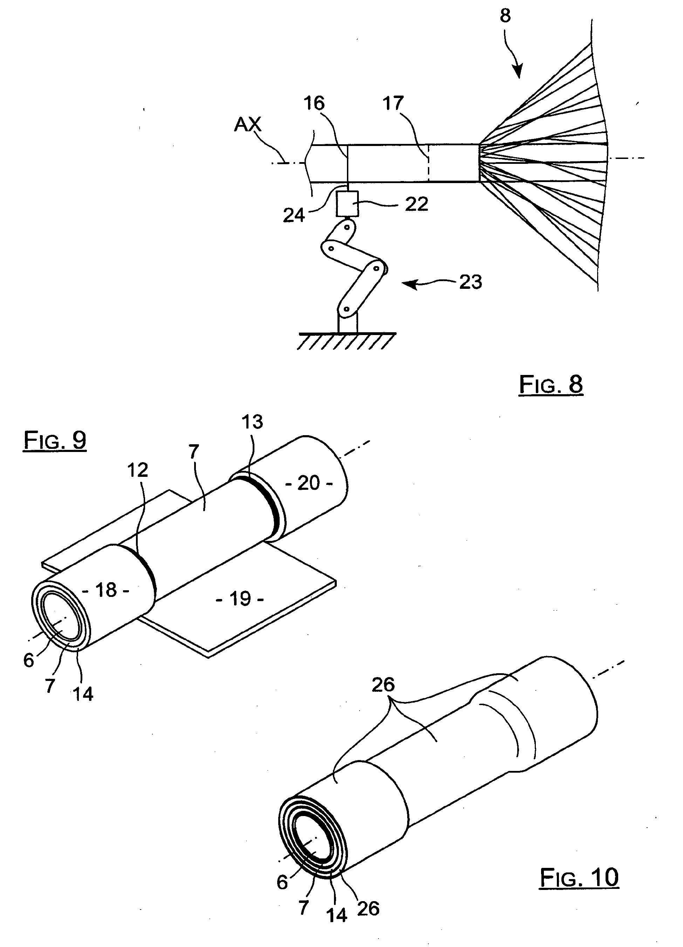

La découpe laser par elle même peut être assurée avec une installation telle que représentée en figure 8, et dans laquelle l'outil de découpe laser 22 est porté par un bras robotisé repéré par 23, cette installation étant alors placée en sortie de la machine de tressage 8.

Dans ces conditions, l'ensemble des opérations peuvent être mises en oeuvre sur une même installation pour minimiser les manipulations, ce qui permet à la fois de réduire le coût de production et d'accroître la qualité de fabrication.

Le bras 23 est alors piloté pour déplacer l'outil 22 autour de l'ensemble constitué par le mandrin 6 et les couches 7 et 14, à une distance prédéterminée de la face externe, et tout en maintenant le faisceau ou rayon laser 24 orienté radialement par rapport à l'axe AX, de manière à réaliser la première découpe 16. La seconde découpe 17 est réalisée de manière analogue.

Une fois que ces deux découpes ont été effectuées, le tronçon central 19 de la couche de fibres renforçantes 14 peut être retiré, comme illustré schématiquement en figure 9. Ceci peut être réalisé manuellement par un opérateur, qui réalise alors avec un objet coupant ou un laser une découpe longitudinale dans la portion tubulaire 19, pour l'ouvrir et la retirer.

A ce stade, et comme illustré en figure 9, les bandes protectrices 12 et 13, si elles ont été mises en place, sont alors à nouveau partiellement visibles : chaque bande protectrice en forme de bague comporte alors une moitié qui est enserrée entre la couche 7 et la couche 14, et une autre moitié qui est uniquement en appui sur la couche tressée intermédiaire 7.

Dans ces conditions, il est possible de, selon le cas, retirer les bandes protectrices 12 et 13, ou bien de les laisser en place définitivement, avant de passer à l'application d'autres couches tressées.

Par ailleurs, il est à noter que préalablement à l'application de la couche 14, on peut avantageusement prévoir l'application d'une couche de colle ou de résine à la face externe de la couche intermédiaire 7, en particulier au niveau des portions de renforcement 18, 20 de cette couche 14, qui doivent être maintenues en position après l'opération de découpe.

Une fois que la portion 19 a été retirée, une nouvelle couche de fibres renforçantes tressées 26 est appliquée sur l'ensemble. Dans ces conditions, et comme illustré schématiquement en figure 10, la portion centrale de la pièce ainsi obtenue est constituée de deux épaisseurs 7 et 26 de fibres renforçantes tressées, alors que chaque extrémité est constituée de trois épaisseurs 7, 14 et 26 de fibres renforçantes tressées.

La pièce de la figure 10, après application des différentes couches de fibres renforçantes, est placée dans un moule pour procéder à l'injection de résine dans les différentes couches tressées, cette résine étant le cas échant choisie pour être compatible avec la résine utilisée pour la fabrication du mandrin 6. Une fois que la résine a été injectée, le moule est piloté pour produire un cycle de chauffe, de manière à provoquer la polymérisation de la résine.

L'ébauche obtenue en sortie de moule a alors sensiblement la même forme générale que dans la figure 10, et plusieurs usinages peuvent alors être réalisés, par exemple à chacune de ses extrémités pour constituer la pièce finie.

Ainsi, les renforts sont produits localement par tressage directement pendant le cycle de fabrication de la pièce, ce qui simplifie considérablement l'élaboration de la pièce. En effet, le procédé de l'invention élimine le recours à des éléments de renforts à préparer avant le tressage de la pièce. La découpe des renforts est réalisée directement sur la préforme en cours d'élaboration. Ceci permet de limiter les manipulations et de mieux maîtriser l'orientation des fibres sur la préforme.

En outre, les renforts ainsi réalisés sont de nature et de caractéristiques mécaniques proches des couches structurelles de la pièce, de sorte qu'il n'y a pas à craindre de problèmes liés à de grandes différences dans les raideurs des renforts et des couches structurelles.

Dans l'exemple des figures 1 à 10, la pièce brute est fabriquée sur un mandrin tubulaire, de manière à illustrer schématiquement le procédé selon l'invention, mais en pratique, le mandrin peut avoir toute forme, en présentant notamment une section qui varie le long de l'axe AX.

D'autre part, dans l'exemple décrit en référence aux figures 1 à 10, les couches qui sont découpées sont tressées autour du mandrin sur toute sa longueur. Mais d'une manière générale, les couches découpées peuvent aussi bien être tressées sur uniquement une partie de la longueur du mandrin, cette partie correspondant aux zones restant en place après découpe.

Pour la réalisation d'une bielle présentant une extrémité en forme de chape double, le mandrin a avantageusement une section sensiblement rectangulaire ou carrée au niveau de l'extrémité en question, et une section circulaire à peu près constante dans sa région centrale le long de l'axe AX.

Dans ce cas, après application des couches tressées, et découpe de certaines des couches intermédiaires pour former des surépaisseurs de renforcement locales, de manière analogue aux indications données relativement aux figure 1 à 10, la pièce est également placée dans un moule pour injection de résine et polymérisation de manière à former une pièce brute rigide.

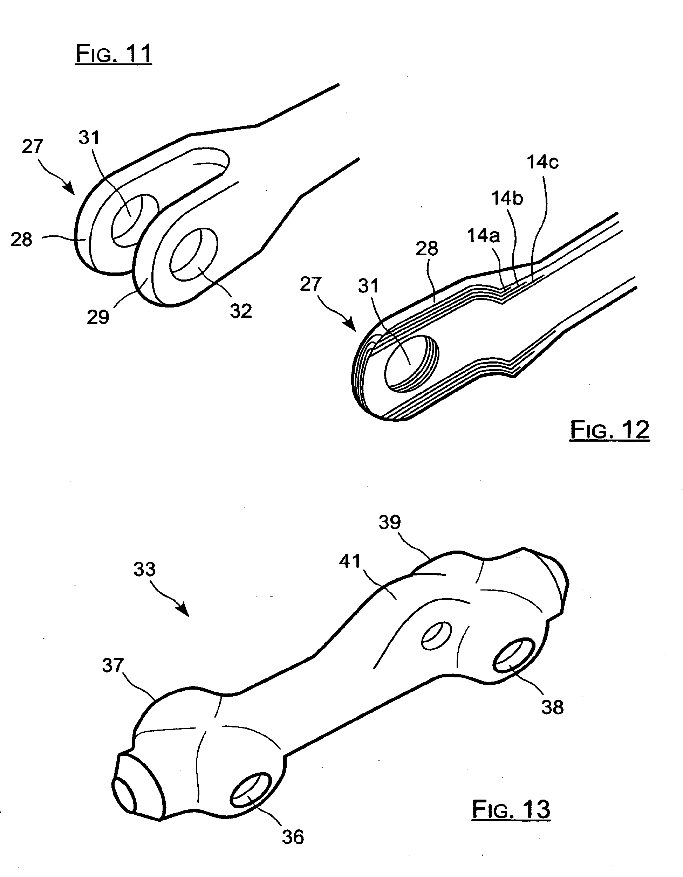

Une opération de fraisage et une opération de perçage sont alors réalisées pour donner à la chape sa forme définitive, comme illustré en figure 11 et 12 où cette chape est repérée par 27.

L'opération de fraisage consiste alors à enlever de la matière sur les parois supérieure et inférieures de l'extrémité de la pièce brute de manière à séparer les deux ailes 28 et 29 de la chape 27 qui correspondent à deux côtés opposés de la section rectangulaire d'extrémité.

Complémentairement, on réalise un perçage dans chaque aile, ces perçages étant repérés par 31 et 32, avant de monter une bague métallique non représentée, dans chacun de ces perçages.

Comme cela apparaît dans la figure 12, chaque aile de la chape comporte alors une série de couches tressées intermédiaires qui ne sont pas présentes dans la région centrale de cette bielle, grâce auxquelles cette aile a une épaisseur plus importante que la région centrale tubulaire de la bielle.

Les couches intermédiaires qui sont représentées explicitement par des traits dans la figure 12 sont au nombre de trois en étant repérées par 14a, 14b, 14c. En ce qui concerne les autres couches, qui s'étendent autour du mandrin mais sur toute sa longueur, elles ne sont pas représentées explicitement sur la figure 12 de manière à en faciliter la lecture.

Comme illustré sur la figure 13, le procédé selon l'invention permet de fabriquer des bielles ayant des formes générales complexes et dont des zones sont renforcées, du fait qu'il est adaptable à un mandrin pouvant avoir une section variant de manière importante le long de l'axe AX. C'est le cas de la bielle représenté en figure 13 qui correspond à un balancier d'atterrisseur.

Plus particulièrement, ce balancier 33 a une forme générale tubulaire et comprend essentiellement une extrémité avant et une extrémité arrière comportant chacune deux paliers traversants, repérés par 36-39, et il comprend en outre entre sa région centrale et son extrémité arrière une chape 41.

Ce balancier peut être fabriqué conformément à l'invention, à partir d'un mandrin de forme appropriée, c'est-à-dire comportant une région centrale de section circulaire constante, et des extrémités ayant des sections de plus grandes dimensions, rectangulaires, pour y former les paliers et les chapes.

Dans ce cas, on prévoit de réaliser des surépaisseurs en partie avant et en partie arrière lors de l'application des couches de fibres tressées, pour former des zones renforcées au niveau des paliers et de la chape supérieure.

D'une manière générale, il est à noter que dans l'exemple illustré sur les figures 1 à 10, le procédé est mis en oeuvre pour insérer une couche intermédiaire unique dont une partie est retirée après découpe. Mais, comme dans l'exemple des figures 11 et 12, l'invention concerne aussi bien une solution dans laquelle on applique alternativement une couche tressée conventionnelle, puis une couche tressée intermédiaire qui est découpée pour en retirer une partie, etc, jusqu'à obtenir les épaisseurs souhaitées.

Par ailleurs, dans ces deux exemples, les couches intermédiaires sont appliquées une par une, mais il est également possible de déposer successivement une ou plusieurs couches intermédiaires qui peuvent alors être découpées conjointement dans une même opération, par exemple avant application d'une autre couche tressée destinée à recouvrir l'ensemble et à ne pas être découpée.

L'invention apporte notamment les avantages suivants :

Grâce à l'invention, on peut mettre en oeuvre une découpe précise de chaque couche tressée intermédiaire après son application, pour réaliser des surépaisseurs localisées renforçant les zones les plus sollicitées, sans devoir effectuer de manipulation après découpe.

Ainsi, notamment, l'ensemble constitué par les couches tressées déposées sur le mandrin a une forme externe qui est mieux maîtrisée, et qui ainsi ne pose pas de difficulté lorsqu'elle doit être mise en place dans le moule. Les portions de fibres renforçantes ayant été déposées par tressage, elles suivent nécessairement le galbe de la bielle dans la zone de renforcement, et ne constituent ainsi pas de pli susceptible de pénaliser la géométrie de la pièce ainsi que sa tenue mécanique.

En particulier, le procédé de découpe par laser permet de réaliser une découpe nette, précise, répétable, automatisable qui ne génère pas d'endommagements sur les extrémités de fibres découpées. D'autres procédés de découpe peuvent aussi être mis en oeuvre, dès lors qu'ils permettent de respecter ces critères à un niveau satisfaisant. Ainsi, une telle découpe pourrait être réalisée mécaniquement avec une lame de type disque tournant, au moyen d'un jet d'eau de découpe, ou encore par chauffage.

Le procédé selon l'invention permet une fabrication rapide, reproductible et quasiment sans assemblage, capable de constituer une structure fibreuse d'épaisseur variable. De plus, les portions tressées formant surépaisseur ont des propriétés proches des autres tresses, ce qui permet de constituer une bielle homogène, ayant par là même une tenue mécanique accrue.

De nombreuses variantes peuvent être apportées au principe décrit ci-dessus. Tout d'abord, la découpe peut être réalisée de façon mécanique (cutter, ciseaux), ce qui est très simple à mettre en oeuvre mais risque de perturber l'organisation des fibres au voisinage de la découpe. On peut encore découper la couche tressée par jet d'eau. Il conviendra cependant de procéder à un séchage complet de la préforme avant son imprégnation par la résine.

On pourra se passer de protection si l'opération de découpe est suffisamment maîtrisée pour éviter d'endommager la couche tressée inférieure, par exemple en effectuant une découpe au moyen d'un laser qui est focalisé très précisément pour ne découper qu'une certaine épaisseur de la couche à découper. Si une protection s'avère nécessaire, on utilisera de préférence une bande de tôle en cuivre, car ce matériau est difficile à découper au laser, car le faisceau de celui-ci est majoritairement réfléchi et diffusé autour du point d'impact. La bande de protection pourra éventuellement être laissée sur place si elle n'affecte pas la tenue mécanique ou les dimensions de la pièce finie.

On pourra également découper plusieurs couches en même temps, si l'on doit déposer sur le mandrin un renfort d'épaisseur importante.

De préférence, le laser est monté en extrémité d'un bras manipulateur disposé à proximité de la tresseuse pour pouvoir effectuer des découpes directement sur le mandrin alors que celui-ci est monté sur le chariot de la tresseuse.

L'invention n'est pas limitée à ce qui vient d'être décrit, mais englobe au contraire toute variante entrant dans le cadre défini par les revendications.

En particulier, bien que l'on ait indiqué que le procédé de l'invention était particulièrement adapté pour produire des pièces d'épaisseurs non constante, on pourra également utiliser le procédé de l'invention pour effectuer des réparations ou des renforts externes sur des pièces déjà produites, celle-ci jouant alors le rôle du mandrin.

Bien que les découpes illustrées soient des découpes qui s'étendent autour du mandrin selon un cercle, on pourra bien sûr effectuer des découpes selon un trajet quelconque. En outre, bien que les renforts illustrés soient annulaires ce qui leur permet de tenir naturellement autour du mandrin, on pourra effectuer des découpes ne laissant qu'une portion de la couche tressée ne faisant pas le tour de la pièce, cette portion constituant alors une sorte de patch local. Il conviendra alors de prévoir des moyens pour faire tenir ce patch sur le reste de la préforme. A cet effet, on pourra pulvériser sur la préforme de la résine avant tressage de la couche qui sera coupée, de sorte que les patchs resteront en place après découpe de la couche. Ce procédé est particulièrement adapté pour renforcer localement la préforme au niveau par exemple d'une partie proéminente de la pièce qui doit être percée pour recevoir un axe d'articulation.

Bien que l'on ait indiqué que la deuxième couche recouvrait tout le mandrin, on pourra se contenter le cas échéant d'un tressage local, ne recouvrant que la partie du mandrin recevant les renforts.

Avantageusement, la couche inférieure et la couche supérieure seront continues, ce qui améliore la résistance de la pièce à l'impact et aux frottements.

En variante, deux couches sont successivement tressées puis simultanément découpées pour former le renfort local tressé.

En variante encore, plusieurs couches continues peuvent être tressées successivement avant que ne soient tressés une ou plusieurs couches à découper.

## Revendications

1. Procédé de fabrication d'une pièce en matériau composite notamment une bielle, comprenant des opérations successives d'application de couches de fibres renforçantes (7, 14, 26 ; 14a, 14b, 14c) tressées autour d'un mandrin (6) et sur tout ou partie de la longueur de ce mandrin en étant superposées les unes aux autres, comportant une étape de découpage d'une couche intermédiaire de fibres renforçantes (14 ; 14a, 14b, 14c) après son application, une étape de retrait d'une partie découpée (19) avant application de la couche tressée suivante (26 ; 14b, 14c), pour constituer localement au niveau de chaque partie de couche découpée restée en place (18, 20), une surépaisseur de fibres renforçantes constituant un renforcement local de la pièce, et dans lequel on injecte ensuite de la résine dans les différentes couches tressées avant de polymériser cette résine pour constituer une ébauche.

2. Procédé selon la revendication 1, comprenant avant application de chaque couche intermédiaire à découper (14 ; 14a, 14b, 14c) l'application d'une bande protectrice (12, 13) disposée selon le contour de découpe (16, 17) afin de protéger la couche tressée appliquée précédemment (7) durant l'opération de découpe de la couche intermédiaire (14 ; 14a, 14b, 14c).

3. Procédé selon la revendication 1, dans lequel la découpe est assurée avec un équipement (23) comportant des moyens (22) d'émission d'un faisceau laser (24).

4. Procédé selon la revendication 1, dans lequel on applique un produit de type colle ou résine avant application de chaque couche intermédiaire (14 ; 14a, 14b, 14c) à découper pour assurer que la portion découpée de la couche intermédiaire qui reste en place (19) soit maintenue en position au cours des opérations suivantes.

5. Procédé selon la revendication 1, comportant une opération de découpe de plusieurs couches intermédiaires qui ont été déposées successivement.

6. Procédé selon la revendication 1, dans lequel on réalise successivement des couches découpées et des couches couvrant intégralement le mandrin.

7. Procédé selon la revendication 1, de fabrication d'une bielle en matériau composite comprenant un ou des paliers et/ou une ou des chapes, et dans lequel les zones de renforcement sont situées au niveau de chaque palier et/ou de chaque chape.

## Patentansprüche

1. Verfahren zum Herstellen eines Teils aus einem Verbundwerkstoff, insbesondere einer Verbindungsstange, umfassend die aufeinanderfolgenden Vorgänge des Aufbringens von Schichten (7, 14, 26; 14a, 14b, 14c) aus geflochtenen verstärkenden Fasern um einen Dorn (6) herum und über die gesamte Länge oder einen Teil der Länge dieses Dorns, indem die Schichten übereinander gelegt werden, umfassend einen Schritt des Schneidens einer Zwischenschicht (14; 14a, 14b, 14c) aus verstärkenden Fasern nach ihrem Aufbringen, einen Schritt des Abziehens eines geschnittenen Abschnitts (19) vor dem Aufbringen der nächsten geflochtenen Schicht (26; 14b, 14c), um lokal im Bereich jedes geschnittenen, am Platz verbleibenden Schichtabschnitts (18, 20) eine Überdicke von verstärkenden Fasern zu bilden, die eine lokale Verstärkung des Teils darstellt, und wobei man dann das Harz in die verschiedenen geflochtenen Schichten einspritzt, ehe dieses Harz polymerisiert wird, um einen Rohling zu bilden.

2. Verfahren nach Anspruch 1, umfassend vor dem Aufbringen jeder zu schneidenden Zwischenschicht (14; 14a, 14b, 14c) das Aufbringen eines entlang der Schnittkontur (16, 17) angeordneten Schutzbandes (12, 13), um die zuvor aufgebrachte geflochtene Schicht (7) während des Schneidevorgangs der Zwischenschicht (14; 14a, 14b, 14c) zu schützen.

3. Verfahren nach Anspruch 1, wobei das Schneiden mit einer Einrichtung (23) sichergestellt wird, die Mittel (22) zum Aussenden eines Laserstrahls (24) umfasst.

4. Verfahren nach Anspruch 1, wobei man ein Produkt nach Art eines Klebstoffs oder Harzes vor dem Aufbringen jeder zu schneidenden Zwischenschicht (14; 14a, 14b, 14c) aufbringt, um sicherzustellen, dass der am Platz verbleibende geschnittene Abschnitt (19) der Zwischenschicht während der nachfolgenden Vorgänge in Position gehalten wird.

5. Verfahren nach Anspruch 1, umfassend einen Schneidevorgang zum Schneiden mehrerer Zwischenschichten, die nacheinander aufgebracht wurden.

6. Verfahren nach Anspruch 1, wobei man nacheinander geschnittene Schichten und den Dorn vollständig überdeckende Schichten erzeugt.

7. Verfahren nach Anspruch 1 zum Herstellen einer Verbindungsstange aus Verbundwerkstoff, umfassend ein oder mehr Lager und/oder ein oder mehr Gabelköpfe, und wobei sich die Verstärkungszonen im Bereich jedes Lagers und/oder jedes Gabelkopfes befinden.

## Claims

1. A method of fabricating a composite material part, in particular a link, the method comprising successive operations of applying reinforcing fiber layers (7, 14, 26; 14a, 14b, 14c) that are braided around a mandrel (6) over all or part of the length of the mandrel, the layers being superposed one on another, the method including a step of cutting an intermediate reinforcing fiber layer (14; 14a, 14b, 14c) after it has been applied, a step of withdrawing a cut portion (19) prior to applying the following braided layer (26; 14b, 14c), thereby locally building up an extra thickness of reinforcing layers on each portion of the cut layer that has remained in place (18, 20), the extra thickness constituting local reinforcement of the part, and wherein resin is subsequently injected into the various braided layers prior to the resin being polymerized in order to prepare a blank.

2. A method according to claim 1, including, prior to applying each intermediate layer for cutting (14; 14a, 14b, 14c), applying a protective band (12, 13) arranged along the outline of the cutting (16, 17) so as to protect the previously-applied braided layer (7) during the operation of cutting the intermediate layer (14; 14a, 14b, 14c).

3. A method according to claim 1, wherein the cutting is performed with equipment (23) including means (22) for emitting a laser beam (24).

4. A method according to claim 1, wherein an adhesive or resin type substance is applied prior to applying each intermediate layer (14; 14a, 14b, 14c) for cutting in order to ensure that the cut portion of the intermediate layer that remains in place (19) is held in position during the following operations.

5. A method according to claim 1, including an operation of cutting through a plurality of intermediate layers that have been deposited in succession.

6. A method according to claim 1, wherein layers for cutting and layers for completely covering the mandrel are made in succession.

7. A method according to claim 1, for fabricating a composite material link including one or more bearings and/or one or more clevises or lugs, and wherein the reinforcing zones are situated at each bearing and/or each clevis or lug.
